# EUROPEAN PATENT SPECIFICATION

(11) **EP 4 309 479 B1**
(45) Date of publication and mention of the grant of the patent: **10.09.2025**
(21) Application number: 23181637.2
(22) Date of filing: 27.06.2023
(51) Int. Cl.: A01B 39/00, A01B 39/14, A01B 33/02, A01B 13/02, A01G 22/10

(54) **A DEVICE FOR CREATING AN ASPARAGUS BED**
VORRICHTUNG ZUR HERSTELLUNG EINES SPARGELBETTS
DISPOSITIF POUR CRÉER UN LIT D'ASPERGES

(30) Priority: 19.07.2022 NL 2032549
(43) Date of publication of application: 24.01.2024
(73) Proprietor: Engels Familie Holding B.V., 5981 NZ Panningen (NL)
(72) Inventor: ENGELS, Franciscus Maria, PANNINGEN (NL); ENGELS, Marcus Franciscus, PANNINGEN (NL); ENGELS, Christiaan Michiel, PANNINGEN (NL)
(74) Representative: Algemeen Octrooi- en Merkenbureau B.V.

(56) References cited:
- EP-A1- 3 799 706
- DE-A1- 19 917 199
- DE-C2- 4 200 934

## Description

The invention relates to a device for creating an asparagus bed, which device is displaceable in a direction of travel for creating the asparagus bed, wherein the device is provided with at least one soil tillage member comprising at least one soil tillage element which is rotatable about a rotation axis, wherein the rotation axis of the rotatable soil tillage element extends substantially traverse to the direction of travel for cultivating soil to form cultivated soil for the asparagus bed, wherein the device furthermore comprises an asparagus bed-forming unit for forming the asparagus bed from the cultivated soil. The invention further relates to a method for creating at least one asparagus bed, wherein the asparagus bed is formed by means of a device as described in this disclosure.

Such a device for creating an asparagus bed is known from DE 19 917 199 A1, DE 42 00 934 C2, and EP 3 799 706 A1.

Although excellent results are obtained with the device known from EP 3 799 706 A1, it is an object of the present invention to provide an improved device for creating an asparagus bed.

This object is achieved with the device as defined in claim 1.

The device for creating an asparagus bed is displaceable in a direction of travel for creating the asparagus bed. The device is provided with at least one soil tillage member comprising at least one soil tillage element which is rotatable about a rotation axis, wherein the rotation axis of the rotatable soil tillage element extends substantially traverse to the direction of travel for cultivating soil to form cultivated soil for the asparagus bed, wherein the device furthermore comprises an asparagus bed-forming unit for forming the asparagus bed from the cultivated soil. The asparagus bed-forming unit is adapted to have an automatically adjustable asparagus bed forming width depending on the amount of soil present in the asparagus bed-forming unit and/or the amount of soil to be received in the asparagus bed-forming unit.
The soil processed by means of the at least one soil tillage element may be collected in the asparagus bed-forming unit which defines the shape of the asparagus bed to be created. Due to the forward movement of the device, an asparagus bed is created by means of the asparagus bed-forming unit behind the asparagus bed-forming unit. By automatically adjusting an asparagus bed forming width of the asparagus bed-forming unit depending on the amount of soil present in the asparagus bed-forming unit and/or the amount of soil to be received in the asparagus bed-forming unit, the device is configured to deal with variable amounts of soil in use such that an undesired built-up of soil in the device or too less soil for creating an asparagus bed can be avoided. The asparagus bed-forming unit is adaptable or adapted to provide an asparagus bed with a predefined height. If the amount of soil is relatively less, the asparagus bed forming width of the asparagus bed-forming unit is reduced, wherein if the amount of soil is relatively big, the asparagus bed forming width of the asparagus bed-forming unit is increased. In this way an asparagus bed can be provided with a variable width and optionally with a constant or a relatively constant height. A relatively constant height may for example be important for subsequent (automated) processes to be performed such as for example automatic or semi-automatic harvesting of the asparagus.

The best possible asparagus bed can be created with an flexible amount of soil in the device by the asparagus bed-forming unit of the device. In addition, the device displacing in the direction of travel will also not push accumulated soil in front of it and/or in it, because of the automatically adjustable asparagus bed forming width such that all the available amount of soil in the device will be processed by the device to create an asparagus bed. Further, the structure and hardness of the asparagus bed is relatively uniform over the entire length of the asparagus bed and the asparagus bed created by the device comprises soil of a relatively airy composition above the asparagus plant which is yet to develop, which is particularly contributory for the growth of the stems to be harvested.

In one aspect, the device comprises at least one measuring device for measuring the amount of soil. The amount of soil to be processed by the device can be measured electronically and/or mechanically. It is for example possible to arrange the measuring device on the device for measuring the amount of soil to be received in the asparagus bed-forming unit, for example in front of, near or at the soil tillage member. The device may be provided with a measuring device comprising a controller and at least one sensor communicating with the controller, wherein the controller communicates with the asparagus bed-forming unit for adjusting, for example by means of actuators, its asparagus bed forming width depending on the amount of soil measured by means of the sensor, for example an ultrasonic sensor. By means of the at least one sensor the amount of soil present in the asparagus bed-forming unit and/or the amount of soil to be received in the asparagus bed-forming unit can be detected electronically. The sensor may for example detect the height of the asparagus bed being formed by the device. If the height detected by the sensor changes, the adjustable asparagus bed-forming width can be changed accordingly. In addition or alternatively, the measuring device may comprise a mechanical arrangement for automatically adjusting its asparagus bed forming width depending on the amount of soil in the asparagus bed-forming unit. The mechanical arrangement may comprise a moveable top plate which may be part of the asparagus bed-forming unit, wherein the top plate is moveable depending on the amount of soil in the asparagus bed-forming unit, wherein dependent on the position of the moveable top plate the asparagus bed forming width is adjustable, for example by means of actuators or the like. It is also possible that a sensor detects the position of the moveable top plate, wherein the sensor is communicating with the controller for adjusting the asparagus bed forming width, for example by means of actuators. The moveable top plate may be a pivotable top plate, wherein if the amount of soil in the asparagus bed-forming unit becomes relatively large, the top plate will pivot upwards and if the amount of soil is relatively less the top plate will pivot downwards, wherein the asparagus bed forming width being adjusted accordingly. The top plate may also have the function of smoothing the ground for providing a relatively flat top of the asparagus bed. It is also possible to provide a sensor measuring the amount of soil in the asparagus bed-forming unit without mechanical arrangement. In this embodiment the sensor detects the amount of soil in the asparagus bed-forming unit in a direct manner.

In a further aspect, the asparagus bed-forming unit comprises two spaced bed width forming-elements defining the automatically adjustable asparagus bed forming width. The two spaced bed width forming-elements define an asparagus bed width in use of the device, wherein the distance between at least sections of the two spaced bed width forming-elements can be automatically varied depending on the amount of soil present in the asparagus bed-forming unit and/or the amount of soil to be received in the asparagus bed-forming unit.

Two spaced bed width forming-members may be pivotable connected to the two spaced bed width forming-elements. Between the two spaced bed width forming-elements the rotatable soil tillage element may be arranged. In one aspect, the distance between two spaced bed width forming-elements can be adjusted automatically which also adjusts the distance between the spaced bed width forming-members, because the spaced bed width forming-members are pivotable connected to the spaced bed width forming-elements. Seen in the direction of travel the spaced bed width forming-members are positioned behind the spaced bed width forming-elements. The distance between the spaced bed width forming-members may be changed by a pivot movement in a separate operation. This separate operation for changing the distance between the spaced bed width forming-members may be independent of the amount of soil in the asparagus bed-forming unit and/or the amount of soil to be received in the asparagus bed-forming unit, e.g. the distance can be changed manually before starting using the device for creating the asparagus beds. It is also possible that the distance between the spaced bed width forming-members is changed automatically dependent of the amount of soil in the asparagus bed-forming unit and/or the amount of soil to be received in the asparagus bed-forming unit. It is further possible, that the distance between the spaced bed width forming-members can be adjusted automatically dependent of the amount of soil in the asparagus bed-forming unit and/or the amount of soil to be received in the asparagus bed-forming unit and independent of the two spaced bed width forming-elements, for example during operation of the device the distance between the two spaced bed width forming-elements may be fixed.

The soil tillage member may furthermore comprise a soil pre-processing mechanism, wherein the soil collected by the soil pre-processing mechanism can subsequently be cultivated by means of the at least one soil tillage element by displacing the device in the direction of travel, wherein the soil pre-processing mechanism is provided with a soil intake measuring device, for example comprising an ultrasonic sensor.

The soil intake measuring device may be configured to communicate with the asparagus bed-forming unit for adjusting its asparagus bed forming width depending on the intake amount of soil into the device measured by means of the soil intake measuring device. The measurement of the intake amount of soil into the device displacing in a direction of travel may be used for automatically adjusting the asparagus bed forming width to provide an asparagus bed and avoiding undesired built-up of soil in the device or in front of the device. These undesired built-ups of soil may result in asparagus beds with an non-uniform structure and/or hardness, which may negatively affect the growing process of the asparagus plant. The asparagus bed provided with the device of this disclosure may have a relatively constant height. In addition, a smooth operation of the cultivation process of the at least one rotatable soil tillage element may be ensured by adjusting, for example by means of actuators or the like, the distance between the two spaced bed width forming-elements, wherein between the two spaced bed width forming-elements the at least one rotatable soil tillage element is arranged.

The soil intake measuring device may further be configured to control a soil intake into the device for creating an asparagus bed. The soil pre-processing mechanism may comprise two spaced ploughing discs, wherein the distance between the two spaced ploughing discs to control the soil intake into the device for creating an asparagus bed can be adjusted, for example the soil intake measuring device is configured to adjust the distance between the two spaced ploughing discs to control the soil intake into the device for creating an asparagus bed. Hence, in addition or alternatively to controlling the adjustable asparagus bed forming width depending on the amount of soil measured by means of the soil intake measuring device, it is also possible to use the soil intake measuring device to set an adjustable optimal distance between the two spaced ploughing discs depending on the circumstances in the field to control the soil intake into the device to minimize the variation of the asparagus bed width of the asparagus bed being formed. Alternatively, it is possible that the distance can be set before using the device, wherein the distance between the two spaced ploughing discs is fixed during use, and the soil intake measuring device does not control the distance between the two spaced ploughing discs.

The device as described in this disclosure may be a self-propelled device or a pulled device.

The above-described aspects will be explained below by means of exemplary embodiments in combination with the figures. However, the invention is not limited to the exemplary embodiments described below. Rather, a number of variants and modifications are possible which also use the inventive idea and therefore fall within the scope of protection. In particular, the possibility of combining the features/aspects which are only mentioned in the description and/or shown in the figures with the features of the claims, in so far as compatible, is mentioned.

Reference is made to the following figures, in which:
Fig. 1 shows a top view of the device for creating an asparagus bed;
Fig. 2 shows a schematic perspective view of the device for creating an asparagus bed.

In the figures, identical components are provided with identical reference signs.

EP 3 799 706 A1 discloses a process and a device to create an asparagus bed. The present disclosure uses a corresponding device to create an asparagus bed, i.e. the device 1 as shown in the figures comprises more or less the same components as the device disclosed in EP 3 799 706 A1. The device 1 comprises wheels (not shown). The device 1 is an improved device 1 compared to the device disclosed in EP 3 799 706 A1, because the asparagus bed-forming unit 17a,b is designed in a manner that depending on the amount of soil present in the asparagus bed-forming unit 17a,b and/or the amount of soil to be received in the asparagus bed-forming unit 17a,b, the asparagus bed forming width W1 is adjustable such that asparagus beds can be created with a variable width. In other words the asparagus bed-forming unit 17a,b is adapted to have an automatically adjustable asparagus bed forming width W1. In addition, it is possible by means of the device 1 to create asparagus beds with a constant or relatively constant height H.
By using the device 1 for creating an asparagus bed the growth of the asparagus plant can be greatly improved by the fact that, due to the orientation of the rotation axis of the rotatable soil tillage element, the soil of the asparagus bed above the asparagus plant which is yet to develop, the so-called growing section for the asparagus stem to be harvested, can be processed to the maximum degree, as a result of which an asparagus bed is provided comprising soil of a relatively airy composition above the asparagus plant which is yet to develop, which is particularly contributory for the growth of the stems to be harvested.

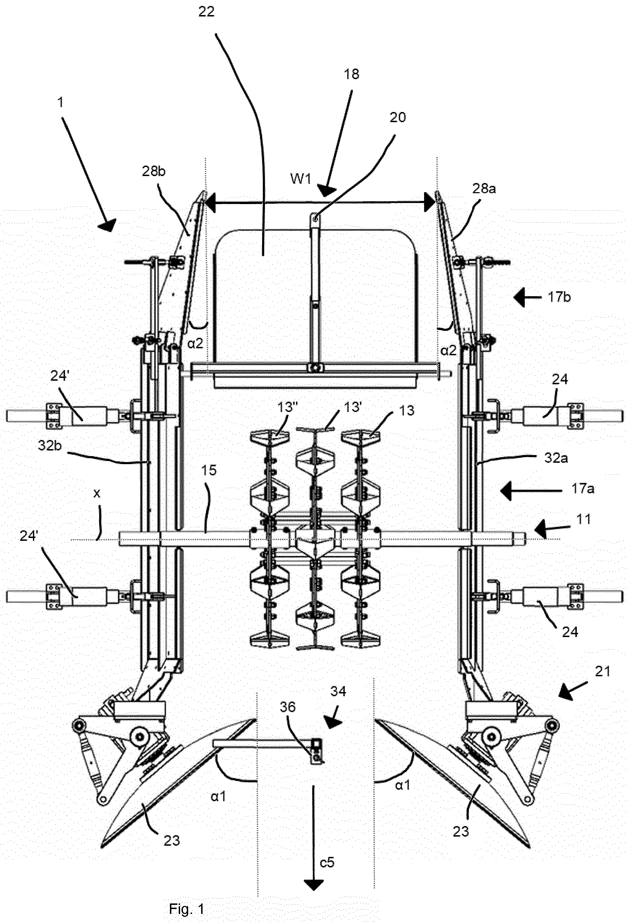

The device 1 further comprises a soil tillage member 11 provided with rotatable soil tillage elements 13, 13', 13". The rotation axis x (or bar 15) of the rotatable soil tillage elements 13, 13', 13" can be set to an adjustable distance or height with respect to an underground and the rotatable soil tillage elements 13, 13', 13" can be rotated at an adjustable speed of rotation by means of a drive unit (not shown) of the device 1. Due to the forward movement of the device 1 in the direction of travel indicated with arrow c5 in figure 1, the or each soil tillage element 13, 13', 13" scoops up soil and the scooped-up soil is thrown up by the rotating movement, resulting in the airy composition of the soil for the asparagus bed. By means of the pre-processing mechanism 21, the soil required for creating the asparagus bed is centred and/or collected. The pre-processing mechanism 21 may provide an intermediate bed form which is higher and narrower than a winter bed. The pre-processing mechanism 21 of the device comprises two pre-processing elements, i.e. ploughing discs 23, which enclose an acute angle α1 with the direction of travel C5 of the device, in such a way that the front parts of the pre-processing elements are situated further apart from each other than the rear parts are. The acute angle α1 lies between 20-70 degrees, preferably between 30-60 degrees. The soil processed by means of the soil tillage elements 13, 13', 13" is collected in the asparagus bed-forming unit 17a,b which provides the shape of the asparagus bed to be formed. Due to the forward movement of the device 1 in the direction of travel C5, an asparagus bed is created behind the asparagus bed-forming unit 17a,b.

The soil tillage elements 13, 13', 13", for example digging blades, are attached to a driven bar 15, preferably next to each other and/or forming a central angle with each other (not shown), for rotating the soil tillage elements 13, 13', 13". Instead of using a single rotation axis x with at least one soil tillage element 13, 13', 13", it is also possible to configure the soil tillage member to have a number of bars / rotation axes, wherein each bar is provided with at least one soil tillage element.

As mentioned above, the asparagus bed-forming unit 17a,b is adapted to have an automatically adjustable asparagus bed forming width W1 depending on the amount of soil present in the asparagus bed-forming unit 17a,b and/or the amount of soil to be received in the asparagus bed-forming unit 17a,b. The asparagus bed-forming unit 17a,b comprises two spaced bed width forming-elements 32a, 32b defining the automatically adjustable asparagus bed forming width W1. In addition, the asparagus bed-forming unit 17a,b comprises two spaced bed width forming-members 28a, 28b which are pivotable connected to the two spaced bed width forming-elements 32a, 32b. Between the two spaced bed width forming-elements 32a, 32b the rotatable soil tillage elements 13, 13', 13" are arranged.

The two spaced bed width forming-members 28a, 28b enclose a fixed acute angle α2 with the direction of travel C5 of the device 1, in such a way that the front parts of the forming-members 28a, 28b are situated further apart from each other than the rear parts are, seen in the direction of travel C5. The acute angle of the forming-members 28a, 28b is smaller than the acute angle α1 of the ploughing discs 23. The acute angle α2 lies between 0-30 degrees, preferably between 0-20 degrees. It is also possible that the forming-members 28a, 28b extend parallel to the direction of travel C5. The two spaced bed width forming-members 28a, 28b are pivotable connected to two spaced bed width forming-elements 32a, 32b. By pivoting two spaced bed width forming-members 28a, 28b with respect to each other the acute angle α2 can be varied which may also vary the asparagus bed forming width W1. It is also possible to pivot only one of the two spaced bed width forming-members 28a, 28b for varying the acute angle α2, which may also vary the asparagus bed forming width W1. Normally, the acute angle α2 of the two spaced bed width forming-members 28a, 28b is set or fixed before using the device 1 to provide asparagus beds on the field, wherein the asparagus bed forming width W1 is changed during use by changing the distance between the two spaced bed width forming-elements 32a, 32b by means of actuators 24, 24'. In addition, it is also possible to omit the two spaced bed width forming-members 28a, 28b in the device 1.

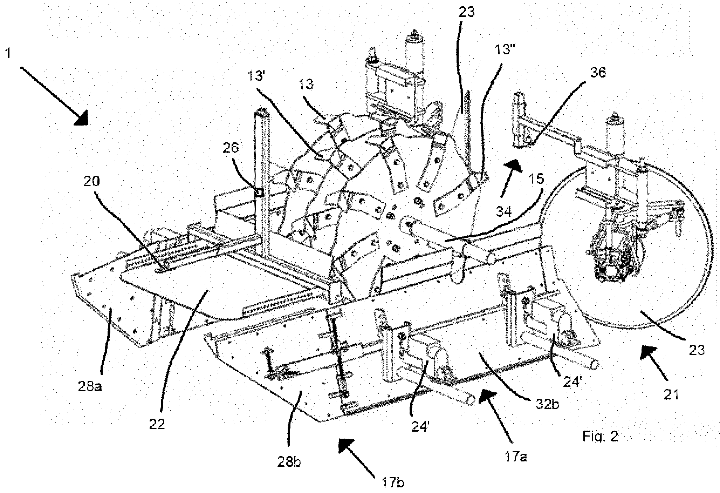

The device 1 comprises a measuring device 18, 34 for measuring the amount of soil to be processed by the device 1, in particular the asparagus bed-forming unit 17a,b. The amount of soil to be processed by the device 1 is measured electronically and/or mechanically. The measuring device 18 comprises a sensor 20 and a mechanical arrangement for automatically adjusting its asparagus bed forming width depending on the amount of soil in the asparagus bed-forming unit 17a,b. The mechanical arrangement comprises a moveable top plate 22 which is part of the asparagus bed-forming unit 17a,b, wherein the top plate 22 is moveable depending on the amount of soil in the asparagus bed-forming unit 17a,b. Dependent on the position of the moveable top plate 22, the asparagus bed forming width W1 can be adjusted, for example by means of actuators 24, 24' or cylinders. The sensor 20 detects the position of the moveable top plate 22, wherein the sensor 20 is communicating with a controller 26 (figure 2) for adjusting the asparagus bed forming width W1 by means of actuators 24, 24'. The moveable top plate 22 is a pivotable top plate rotating about a rotation axis parallel to rotation axis x, wherein if the amount of soil in the asparagus bed-forming unit 17a,b becomes relatively large, the top plate 22 will pivot upwards and if the amount of soil is relatively less the top plate 22 will pivot downwards, wherein the asparagus bed forming width W1 being adjusted accordingly. Instead of the sensor, the position of the top plate 22 can be measured in a number of ways, for example by means of a mechanical detector or a mechanical position sensor which is connected with the actuators 24, 24' to adjust the asparagus bed forming width W1. In an embodiment not shown, it is also possible that the sensor 20 measures the amount of soil in in the asparagus bed-forming unit 17a,b directly, i.e. without a top plate 22 or that the sensor 20 detects the height of the asparagus bed being formed by the device. If the height detected by the sensor changes, the adjustable asparagus bed-forming width will be changed accordingly. The sensor for measuring the amount of soil directly is for example an ultrasonic sensor. Such a sensor may also have a different position in the device 1 compared to sensor 20, i.e. such a sensor may be positioned in front of, near or at the soil tillage member.

The soil pre-processing mechanism 21 is provided with a soil intake measuring device 34. The soil intake measuring device 34 may be configured to communicate with the asparagus bed-forming unit 17a,b for adjusting its asparagus bed forming width W1 depending on the intake amount of soil measured by means of the soil intake measuring device 34, for example by moving the two spaced bed width forming-elements 32a, 32b by means of actuators 24, 24' with respect to each other. The soil intake measuring device 34 comprises a sensor 36, for example an ultrasonic sensor, for determining the amount of soil to be received in the device 1, in particular in the asparagus bed-forming unit 17a,b. The sensor 36 communicates with controller 26 or another controller of the device (not shown), wherein the controller 26 may communicate with actuators 24, 24' to adjust asparagus bed forming width W1. The measurement of the intake amount of soil into the device displacing in a direction of travel may be used for automatically adjusting the asparagus bed forming width W1. It is possible by means of the device 1 to provide an asparagus bed with a relatively constant height H. In addition, the configuration of the device 1 avoids undesired built-up of soil in the device 1 or in front of the device 1.

The soil intake measuring device 34 may further be configured to control a soil intake into the device 1 for creating an asparagus bed. The soil intake measuring device 34 is configured to adjust the distance between the two spaced ploughing discs 23, or alternatively the angle α1 of at least one of the two spaced ploughing discs, to control the soil intake into the device 1 for creating an asparagus bed. Hence, the soil intake measuring device 34 may be used to control the adjustable asparagus bed forming width W1 depending on the amount of soil detected by the soil intake measuring device 34, and/or the soil intake measuring device 34 may be used to automatically set an adjustable optimal distance between the two spaced ploughing discs 23 depending on the circumstances in the field to control the soil intake into the device for example to minimize the variation of the asparagus bed width of the asparagus bed being formed. It is also possible that the distance can be mechanically set before using the device, whereas in use it is not possible to automatically adjust the distance between the two spaced ploughing discs 23 based on input of the intake measuring device 34.

The distance between the spaced bed width forming-members 28a, 28b can be changed independent of the amount of soil in the asparagus bed-forming 17a,b unit and/or the amount of soil to be received in the asparagus bed-forming unit 17a,b, e.g. the distance can be changed manually before staring using the device for creating the asparagus beds and during use of the device the distance can only be changed by movement of the spaced bed width forming-elements 32a,b by means of the actuators 24, 24'. However, it is also possible that the distance between the spaced bed width forming-members 28a, 28b is changed automatically dependent of the amount of soil in the asparagus bed-forming unit 17a,b and/or the amount of soil to be received in the asparagus bed-forming unit 17a,b. It is further possible, that the distance between the spaced bed width forming-members 28a,b can be adjusted automatically dependent of the amount of soil in the asparagus bed-forming unit and/or the amount of soil to be received in the asparagus bed-forming unit and independent of the two spaced bed width forming-elements 32a,b, i.e. in such an embodiment (not shown) the distance between the two spaced bed width forming-elements may be fixed during operation of the device. In the method as claimed, the improved device 1 of this disclosure is used to create an asparagus bed or an asparagus field with a number of asparagus beds.

## Claims

1. A device (1) for creating an asparagus bed, which device is displaceable in a direction of travel (c5) for creating the asparagus bed, wherein the device is provided with at least one soil tillage member (11) comprising at least one soil tillage element (13, 13', 13") which is rotatable about a rotation axis (x), wherein the rotation axis of the rotatable soil tillage element extends substantially traverse to the direction of travel for cultivating soil to form cultivated soil for the asparagus bed, wherein the device furthermore comprises an asparagus bed-forming unit (17a,b) for forming the asparagus bed from the cultivated soil, **characterised in that** the asparagus bed-forming unit is adapted to have an automatically adjustable asparagus bed forming width (W1) depending on the amount of soil present in the asparagus bed-forming unit and/or the amount of soil to be received in the asparagus bed-forming unit.

2. The device (1) according to Claim 1, wherein the device comprises at least one measuring device (18; 34) for measuring the amount of soil.

3. The device (1) according to Claim 2, wherein the measuring device comprises a controller (26) and at least one sensor (20; 36) communicating with the controller, wherein the controller communicates with the asparagus bed-forming unit for adjusting its asparagus bed forming width depending on the amount of soil measured by means of the sensor.

4. The device (1) according to Claim 2 or 3, wherein the measuring device comprises a mechanical arrangement for automatically adjusting its asparagus bed forming width depending on the amount of soil in the asparagus bed-forming unit.

5. The device (1) according to Claim 4, wherein the mechanical arrangement comprises a moveable top plate (22) which is part of the asparagus bed-forming unit, wherein the top plate is moveable depending on the amount of soil in the asparagus bed-forming unit.

6. The device (1) according to one of the preceding claims, wherein the asparagus bed-forming unit comprises two spaced bed width forming-elements (32a, 32b) defining the automatically adjustable asparagus bed forming width.

7. The device (1) according to Claim 6, wherein the asparagus bed-forming unit comprises two spaced bed width forming-members (28a, 28b) which are pivotable connected to the two spaced bed width forming-elements, and/or between the two spaced bed width forming-elements the rotatable soil tillage element is arranged.

8. The device (1) according to one of the preceding claims, wherein the device furthermore comprises a soil pre-processing mechanism (21), wherein the soil collected by the pre-processing mechanism can subsequently be cultivated by means of the at least one soil tillage element by displacing the device in the direction of travel, wherein the soil pre-processing mechanism is provided with a soil intake measuring device, for example comprising an ultrasonic sensor.

9. The device (1) according to Claim 8, wherein the soil intake measuring device configured to communicate with the asparagus bed-forming unit for adjusting its asparagus bed forming width depending on the intake amount of soil measured by means of the soil intake measuring device.

10. The device (1) according to Claim 8 or 9, wherein the soil intake measuring device is configured to control a soil intake into the device for creating an asparagus bed.

11. The device (1) according to Claim 8, 9, or 10, wherein the soil pre-processing mechanism comprising two spaced ploughing discs (23), wherein the distance between the two spaced ploughing discs to control the soil intake into the device for creating an asparagus bed can be adjusted, for example the soil intake measuring device is configured to adjust the distance between the two spaced ploughing discs to control the soil intake into the device for creating an asparagus bed.

12. The device (1) according to one of the preceding claims, wherein the device is a self-propelled device.

13. The device (1) according to one of the preceding claims 1-11, wherein the device is a pulled device.

14. A method for creating at least one asparagus bed, wherein the asparagus bed is formed by means of a device (1) according to one of the preceding claims.

## Patentansprüche

1. Vorrichtung (1) zur Herstellung eines Spargelbetts, wobei die Vorrichtung in einer Fahrtrichtung (c5) verschiebbar ist, um das Spargelbett herzustellen, wobei die Vorrichtung mit mindestens einem Bodenbearbeitungselement (11) versehen ist, das mindestens ein Bodenbearbeitungselement (13, 13', 13") umfasst, das um eine Drehachse (x) drehbar ist, wobei sich die Drehachse des drehbaren Bodenbearbeitungselements im Wesentlichen quer zur Fahrtrichtung zum Kultivieren von Boden zur Bildung von Kulturboden für das Spargelbett erstreckt, wobei die Vorrichtung ferner eine Spargelbettbildungseinheit (17a,b) zum Bilden des Spargelbetts aus dem Kulturboden umfasst, **dadurch gekennzeichnet, dass** die Spargelbettbildungseinheit dazu angepasst ist, eine automatisch einstellbare Spargelbettbildungsbreite (W1) in Abhängigkeit von der in der Spargelbettbildungseinheit vorhandenen Bodenmenge und/oder der in der Spargelbettbildungseinheit aufzunehmenden Bodenmenge aufzuweisen.

2. Vorrichtung (1) nach Anspruch 1, wobei die Vorrichtung mindestens eine Messvorrichtung (18; 34) zum Messen der Bodenmenge umfasst.

3. Vorrichtung (1) nach Anspruch 2, wobei die Messvorrichtung eine Steuerung (26) und mindestens einen Sensor (20; 36) umfasst, der mit der Steuerung kommuniziert, wobei die Steuerung mit der Spargelbettbildungseinheit kommuniziert, um ihre Spargelbettbildungsbreite in Abhängigkeit von der mittels des Sensors gemessenen Bodenmenge einzustellen.

4. Vorrichtung (1) nach Anspruch 2 oder 3, wobei die Messvorrichtung eine mechanische Anordnung zum automatischen Einstellen ihrer Spargelbettbildungsbreite in Abhängigkeit von der Bodenmenge in der Spargelbettbildungseinheit umfasst.

5. Vorrichtung (1) nach Anspruch 4, wobei die mechanische Anordnung eine bewegliche obere Platte (22) umfasst, die Teil der Spargelbettbildungseinheit ist, wobei die obere Platte in Abhängigkeit von der Bodenmenge in der Spargelbettbildungseinheit beweglich ist.

6. Vorrichtung (1) nach einem der vorhergehenden Ansprüche, wobei die Spargelbettbildungseinheit zwei beabstandete Bettbreitenbildungselemente (32a, 32b) umfasst, die die automatisch einstellbare Spargelbettbildungsbreite definieren.

7. Vorrichtung (1) nach Anspruch 6, wobei die Spargelbettbildungseinheit zwei beabstandete Bettbreitenbildungselemente (28a, 28b) umfasst, die schwenkbar mit den zwei beabstandeten Bettbreitenbildungselementen verbunden sind, und/oder zwischen den zwei beabstandeten Bettbreitenbildungselementen das drehbare Bodenbearbeitungselement angeordnet ist.

8. Vorrichtung (1) nach einem der vorhergehenden Ansprüche, wobei die Vorrichtung ferner einen Bodenvorbehandlungsmechanismus (21) umfasst, wobei der von dem Vorbehandlungsmechanismus gesammelte Boden anschließend mittels des mindestens einen Bodenbearbeitungselements durch Verschieben der Vorrichtung in Fahrtrichtung kultivierbar ist, wobei der Bodenvorbehandlungsmechanismus mit einer Bodenaufnahmemessvorrichtung, beispielsweise umfassend einen Ultraschallsensor, versehen ist.

9. Vorrichtung (1) nach Anspruch 8, wobei die Bodenaufnahmemessvorrichtung dazu ausgelegt ist, mit der Spargelbettbildungseinheit zu kommunizieren, um ihre Spargelbettbildungsbreite in Abhängigkeit von der mittels der Bodenaufnahmemessvorrichtung gemessenen Bodenaufnahmemenge einzustellen.

10. Vorrichtung (1) nach Anspruch 8 oder 9, wobei die Bodenaufnahmemessvorrichtung dazu ausgelegt ist, eine Bodenaufnahme in die Vorrichtung zur Herstellung eines Spargelbetts zu steuern.

11. Vorrichtung (1) nach Anspruch 8, 9 oder 10, wobei der Bodenvorbehandlungsmechanismus zwei beabstandete Pflugscheiben (23) umfasst, wobei der Abstand zwischen den zwei beabstandeten Pflugscheiben zur Steuerung der Bodenaufnahme in die Vorrichtung zur Herstellung eines Spargelbetts eingestellt werden kann, wobei beispielsweise die Bodenaufnahmemessvorrichtung dazu ausgelegt ist, den Abstand zwischen den zwei beabstandeten Pflugscheiben einzustellen, um die Bodenaufnahme in die Vorrichtung zur Herstellung eines Spargelbetts zu steuern.

12. Vorrichtung (1) nach einem der vorhergehenden Ansprüche, wobei die Vorrichtung eine selbstfahrende Vorrichtung ist.

13. Vorrichtung (1) nach einem der vorhergehenden Ansprüche 1-11, wobei die Vorrichtung eine gezogene Vorrichtung ist.

14. Verfahren zur Herstellung mindestens eines Spargelbetts, wobei das Spargelbett mittels einer Vorrichtung (1) nach einem der vorhergehenden Ansprüche gebildet wird.

## Revendications

1. Dispositif (1) de création d'un lit d'asperges, lequel dispositif peut se déplacer dans une direction de déplacement (c5) pour créer le lit d'asperges, dans lequel le dispositif est muni d'au moins un organe de travail du sol (11) comprenant au moins un élément de travail du sol (13, 13', 13") qui peut tourner autour d'un axe de rotation (x), dans lequel l'axe de rotation de l'élément rotatif de travail du sol s'étend sensiblement transversalement à la direction de déplacement pour cultiver le sol afin de former un sol cultivé pour le lit d'asperges, dans lequel le dispositif comprend en outre une unité de formation de lit d'asperges (17a, b) pour former le lit d'asperges à partir du sol cultivé, **caractérisé en ce que** l'unité de formation de lit d'asperges est adaptée pour avoir une largeur de formation de lit d'asperges (W1) réglable automatiquement en fonction de la quantité de sol présente dans l'unité de formation de lit d'asperges et/ou de la quantité de sol à recevoir dans l'unité de formation de lit d'asperges.

2. Dispositif (1) selon la revendication 1, dans lequel le dispositif comprend au moins un dispositif de mesure (18 ; 34) pour mesurer la quantité de sol.

3. Dispositif (1) selon la revendication 2, dans lequel le dispositif de mesure comprend une unité de commande (26) et au moins un capteur (20 ; 36) communiquant avec l'unité de commande, dans lequel l'unité de commande communique avec l'unité de formation de lit d'asperges pour régler sa largeur de formation de lit d'asperges en fonction de la quantité de sol mesurée au moyen du capteur.

4. Dispositif (1) selon la revendication 2 ou 3, dans lequel le dispositif de mesure comprend un agencement mécanique pour régler automatiquement sa largeur de formation de lit d'asperges en fonction de la quantité de sol dans l'unité de formation de lit d'asperges.

5. Dispositif (1) selon la revendication 4, dans lequel l'agencement mécanique comprend une plaque supérieure mobile (22) qui fait partie de l'unité de formation de lit d'asperges, dans lequel la plaque supérieure est mobile en fonction de la quantité de sol dans l'unité de formation de lit d'asperges.

6. Dispositif (1) selon l'une des revendications précédentes, dans lequel l'unité de formation de lit d'asperges comprend deux éléments de formation de largeur de lit espacés (32a, 32b) définissant la largeur de formation de lit d'asperges réglable automatiquement.

7. Dispositif (1) selon la revendication 6, dans lequel l'unité de formation de lit d'asperges comprend deux organes de formation de largeur de lit espacés (28a, 28b) qui sont reliés en pivotement aux deux éléments de formation de largeur de lit espacés, et/ou entre les deux éléments de formation de largeur de lit espacés est agencé l'élément rotatif de travail du sol.

8. Dispositif (1) selon l'une des revendications précédentes, dans lequel le dispositif comprend en outre un mécanisme de prétraitement de sol (21), dans lequel le sol collecté par le mécanisme de prétraitement peut ensuite être cultivé au moyen de l'au moins un élément de travail du sol en déplaçant le dispositif dans la direction de déplacement, dans lequel le mécanisme de prétraitement de sol est muni d'un dispositif de mesure d'absorption de sol, comprenant par exemple un capteur à ultrasons.

9. Dispositif (1) selon la revendication 8, dans lequel le dispositif de mesure d'absorption de sol est configuré pour communiquer avec l'unité de formation de lit d'asperges afin de régler sa largeur de formation de lit d'asperges en fonction de la quantité d'absorption de sol mesurée au moyen du dispositif de mesure d'absorption de sol.

10. Dispositif (1) selon la revendication 8 ou 9, dans lequel le dispositif de mesure d'absorption de sol est configuré pour commander l'absorption de sol dans le dispositif de création d'un lit d'asperges.

11. Dispositif (1) selon la revendication 8, 9 ou 10, dans lequel le mécanisme de prétraitement de sol comprend deux disques de labour espacés (23), dans lequel la distance entre les deux disques de labour espacés pour commander l'absorption de sol dans le dispositif de création d'un lit d'asperges peut être réglée, par exemple le dispositif de mesure d'absorption de sol est configuré pour régler la distance entre les deux disques de labour espacés afin de commander l'absorption de sol dans le dispositif de création d'un lit d'asperges.

12. Dispositif (1) selon l'une des revendications précédentes, dans lequel le dispositif est un dispositif automoteur.

13. Dispositif (1) selon l'une des revendications 1 à 11 précédentes, dans lequel le dispositif est un dispositif tracté.

14. Procédé de création d'au moins un lit d'asperges, dans lequel le lit d'asperges est formé au moyen d'un dispositif (1) selon l'une des revendications précédentes.
